(19) Europäisches Patentamt
European Patent Office
Office européen des brevets

(11) **EP 2 428 490 B1**

(12) **FASCICULE DE BREVET EUROPEEN**

(45) Date de publication et mention
de la délivrance du brevet:
**22.10.2014 Bulletin 2014/43**

(51) Int Cl.:
***C01C 1/00*** *(2006.01)*          ***F17C 1/00*** *(2006.01)*
***F01N 3/20*** *(2006.01)*

(21) Numéro de dépôt: **10009430.9**

(22) Date de dépôt: **10.09.2010**

(54) **Système pour réduire la quantité de NOx dans les gaz d'échappement d'un véhicule à moteur**

Verfahren zur Reduzierung der Menge an Stickoxiden (NOx) in Abgasen von Kraftfahrzeugen

System for reducing the amount of NOx in the exhaust fumes of a motor vehicle

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**14.03.2012 Bulletin 2012/11**

(73) Titulaire: **Aaqius & Aaqius S.A.**
**1207 Genève (CH)**

(72) Inventeur: **Audouin, Arnaud**
**75018 Paris (FR)**

(74) Mandataire: **Regimbeau**
**20, rue de Chazelles**
**75847 Paris Cedex 17 (FR)**

(56) Documents cités:
**EP-A1- 1 977 817     WO-A1-2010/025947**
**US-A- 4 852 645**

• **WANG K ET AL: "Effective thermal conductivity of expanded graphite-CaCl2 composite adsorbent for chemical adsorption chillers", ENERGY CONVERSION AND MANAGEMENT, ELSEVIER SCIENCE PUBLISHERS, OXFORD, GB, vol. 47, no. 13-14, 1 août 2006 (2006-08-01), pages 1902-1912, XP025067235, ISSN: 0196-8904, DOI: DOI:10.1016/J.ENCONMAN.2005.09.005 [extrait le 2006-08-01]**
• **J.H. HAN AND K.H. LEE: "Gas permeability of expanded graphite-metallic salt composite", APPLIED THERMAL ENGINEERING, vol. 21, no. 4, 1 mars 2000 (2000-03-01), pages 453-463, XP002620755,**

**Description**

L'invention proposée concerne l'industrie automobile et porte plus particulièrement sur un matériau composite destiné au stockage et à l'injection d'ammoniac pour la réduction des NOx dans les gaz d'échappement d'un véhicule à moteur par SCR (*Selective Catalytic Reduction).*

La sévérisation progressive des limites en émission pour les quatre polluants réglementés (CO, HC, NOx, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Ainsi, la réduction des oxydes d'azote (NOx) reste une problématique complexe dans le contexte de la sévérisation des seuils européen d'émission attendu en 2015 pour l'entrée en vigueur de la norme €6. Disposer de technologies de dépollution à forte efficacité dans toutes les conditions de roulage reste un enjeu majeur pour l'industrie du transport.

Par ailleurs, la consommation de carburant, en lien direct avec les émissions de CO2, est devenue une préoccupation majeure. Ainsi, une réglementation sera mise en place au niveau européen à partir de 2012 sur les émissions de CO2 des véhicules particuliers. Il est d'ores et déjà acquis que cette limite sera régulièrement abaissée au cours des décennies à venir. La réduction de CO2 s'est donc imposée à l'évidence pour toute l'industrie des transports.

Cette double problématique réduction de la pollution locale (NOx) et réduction de la consommation carburant (CO2) est particulièrement difficile pour le moteur Diesel dont la combustion en mélange pauvre s'accompagne d'émission NOx difficile à traiter.

C'est dans ce contexte que la technologie de post-traitement des gaz d'échappement par SCR est utilisée à la fois pour les véhicules particuliers et pour les véhicules affectés au transport de marchandises. Il a en effet été démontré que la forte efficacité de réduction NOx permet de positionner le moteur sur son fonctionnement optimal en rendement, les fortes émissions de NOx émises à ce régime étant ensuite traitées dans l'échappement par le système SCR.

Pour cela, la technologie SCR implique d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose sous l'effet de la température des gaz d'échappement en ammoniac (NH3) et permet la réduction des NOx dans un catalyseur spécifique.

Ce procédé très efficace souffre pourtant d'un certain nombre d'inconvénients. L'efficacité à froid est limitée (cas d'un bus en ville par exemple). Par ailleurs, la masse et le volume pour le réservoir d'urée sont importants (typiquement 15 à 30 litres en véhicule particulier et 40 à 80 litres pour les poids-lourds), ce qui entraîne une complexité d'intégration dans le véhicule d'autant plus importante que le véhicule est petit. Enfin, le coût de la dépollution pour ce genre de système est élevé.

Des systèmes permettant le stockage d'ammoniac au sein de sels de type chlorure de métaux alcalino-terreux (MgCl2, SrC12, CaC12, BaC12, etc...) par la formation de complexe chimique du type ammoniacate ont été développés. A titre d'exemple, les demandes WO06/012903 et WO06/081824 décrivent la mise en oeuvre d'un matériau de stockage spécifique à la SCR caractérisé par une densité supérieur à 70% de la densité cristalline de l'ammoniacate. Le sel est dans un premier temps saturé en ammoniac, le complexe est ensuite compacté.

Le document WO 2010/025947 concerne un procédé de saturation réversible de matériaux de stockage de l'ammoniac dans une enceinte. Le document WANG K ET AL « Effective thermal conductivity of expanded graphite-CaCl2 composite adsorbent for chemical adsorption chillers » décrit des données de conductivité thermique de composites pour des applications aux pompes à chaleur. Le document US 4 852 645 concerne une couche de transfert thermique avec un coefficient de transfert élevé. Le document J.H. HAN AND K.H. LEE « Gas permeability of expanded graphite-metallic salt composite » concerne la perméabilité aux gaz de composites pour des applications aux pompes à chaleur.

Le simple compactage d'un sel saturé en ammoniac ne conduit pas à la réalisation d'un matériau de stockage satisfaisant pour une application aisée à la dépollution SCR automobile. En effet, la faible conductivité thermique du sel compacté freine le transfert de chaleur au sein du matériau et donc le temps de réponse de la désorption d'ammoniac pour des volumes importants de matériau. Pour disposer d'un temps de réponse suffisamment court, il est alors nécessaire de disposer d'une enceinte de faible volume dédiée au démarrage (start-up unit) munie d'un dispositif de chauffage puissant et d'une enceinte de grand volume dédiée au stockage. C'est l'architecture retenu par la société Amminex comme décrit dans la publication du congrès VDI de Juillet 2009.

Par ailleurs, la désorption au sein du matériau de forte densité génère la formation de nanopores qui permettent l'évacuation progressive de l'ammoniac comme décrit dans la publication de Hummelshoj et al. (Am. Chem. Soc., Vol 128, 2006, Amminex). Ce type de matériau ne peut pas être resaturé en ammoniac de façon satisfaisante. La forte augmentation de volume liée à l'absorption conduit à l'obstruction des canaux et donc à un blocage partiel de la réaction d'absorption. L'unité de stockage ne peut être remplie entièrement. Un scénario de recyclage doit être envisagé, impliquant un coût à l'usage élevé du concept.

Ainsi, la présente invention a pour but de proposer un matériau pour le stockage et l'injection d'ammoniac pour la réduction des NOx dans les gaz d'échappement d'un véhicule à moteur par SCR qui permet un stockage à la fois dense en ammoniac et réversible sans dégradation de la structure du matériau et qui par ailleurs possède un temps de réponse suffisamment court pour la désorption de l'ammoniac.

Conformément à l'invention, ce but est atteint grâce à un matériau composite de stockage et d'alimentation en ammoniac pour la réduction des NOx par SCR comportant par un ou plusieurs complexes chimiques de formule générale $M_a(NH3)nXm$; où M est un ou plusieurs cations métalliques alcalins comme Li, Na, K ou Cs, ou métalliques alcalino-terreux comme Mg, Ca, Sr ou Ba, ou métalliques de transition comme V, Cr, Fe, Co, Ni, Cu ou Zn ; où X est un ou plusieurs anions de type fluorure, bromure, ou chlorure; où a est le nombre de cations par molécule de sel, m est le nombre d'anions par molécule, et n est le nombre de coordination du complexe pouvant être compris entre 2 et 12. Le matériau comporte en outre du graphite expansé formant après compression une matrice poreuse dans laquelle sont dispersés les grains de sels.

Les caractéristiques de l'invention apparaîtront plus clairement à la lecture de la description d'une forme d'exécution préférentielle, donnée uniquement à titre d'exemple, nullement limitative en se référant aux figures schématiques, dans lesquelles:

- la figure 1 illustre les principaux constituants d'un moteur thermique équipé du système de post-traitement SCR par injection d'ammoniac;

- la figure 2 représente les courbes d'équilibre température/pression pour trois sels utilisés dans le matériau composite;

- la figure 3 représente une photographie de lamelles de graphite s'intercalant entre les grains de sels selon un axe perpendiculaire à l'axe de compression du matériau composite;

- la figure 4 illustre le principe de fonctionnement du système de stockage selon l'invention;

- la figure 5a illustre un système de stockage et d'alimentation en ammoniac comportant une enceinte, un matériau composite, un élément diffuseur, et un corps de chauffe selon une première variante d'exécution;

- la figure 5b illustre un système de stockage et d'alimentation en ammoniac selon une deuxième variante d'exécution;

- la figure 5c illustre un système de stockage et d'alimentation en ammoniac selon une troisième variante d'exécution;

- la figure 5d illustre un système de stockage et d'alimentation en ammoniac selon une quatrième variante d'exécution.

### Système de post-traitement SCR par injection NH3

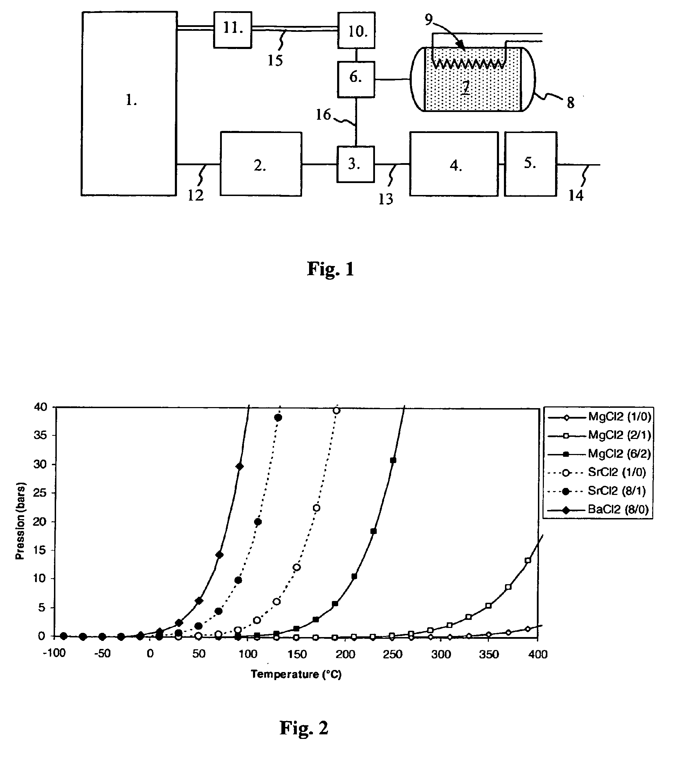

Selon la figure 1, le moteur 1 est piloté par un calculateur électronique 11. A la sortie du moteur, les gaz d'échappement 12 sont dirigés vers un premier élément de dépollution 2, qui peut être constitué d'un catalyseur d'oxydation ou à trois voies et éventuellement d'un filtre à particules. L'ammoniac 16 est injecté à l'échappement et mélangé aux gaz d'échappement au moyen d'un module d'injection 3. Le mélange ammoniac/gaz d'échappement 13 traverse ensuite un catalyseur SCR 4 qui permet la réduction des NOx par l'ammoniac. Divers éléments complémentaires de post-traitement 5 peuvent être positionnés après le catalyseur SCR tel qu'un filtre à particules ou un catalyseur d'oxydation. Les gaz d'échappement dépollués 14 sont ensuite dirigés vers la sortie d'échappement.

Pour assurer l'alimentation et le dosage de l'ammoniac 16, une enceinte de stockage d'ammoniac 8 est reliée à un dispositif d'alimentation et de dosage 6 agencé pour être piloté par un contrôleur électronique 10 asservi par le calculateur électronique 11 1 du moteur. L'enceinte 8 comporte un matériau de stockage 7 contrôlé en température par un dispositif de réchauffage 9 tel qu'une résistance électrique ou un échangeur de chaleur alimenté par un fluide caloporteur tel que le liquide de refroidissement moteur.

### Stockage d'ammoniac dans les sels chlorures d'alcalino-terreux

Dans le système proposé, le stockage d'ammoniac repose sur une réaction réversible solide - gaz du type :

$$\langle \text{Solide A} \rangle \; + \; (\text{Gaz}) \; \rightleftarrows \; \langle \text{Solide B} \rangle$$

En l'occurrence, l'ammoniac forme avec les chlorures d'alcalino-terreux des complexes de coordination aussi appelé ammoniacates. Ce phénomène est connu et décrit abondamment dans la littérature.

Par exemple, les réactions de l'ammoniac avec le chlorure de strontium sont :

$$SrCl_2 + NH3 \rightleftarrows Sr(NH_3)Cl_2$$

$$Sr(NH_3)Cl_2 + 7\,NH_3 \rightleftarrows Sr(NH_3)_8\,Cl_2$$

Et pour l'ammoniac avec le chlorure de Baryum, une seule réaction :

$$BaCl_2 + 8\,NH_3 \rightleftarrows Ba(NH_3)_8\,Cl_2$$

L'absorption chimique du ligand ammoniac par l'absorbant $SrCl_2$ et $BaCl_2$ entraîne, entre le solide et le gaz, un transfert d'électrons qui se traduit par des liaisons chimiques entre $NH_3$ et la couche externe des atomes constituant les molécules de $SrCl_2$ et $BaCl_2$. La pénétration du gaz dans la structure du solide se fait dans la totalité de sa masse par un processus de diffusion. Cette réaction est parfaitement réversible, l'absorption étant exothermique et la désorption endothermique.

Au cours de cette réaction, la fixation du gaz par le solide s'accompagne d'une augmentation de volume, l'octoammoniacate occupant alors un volume très supérieur au volume du sel pur (jusqu'à un rapport de 4 à 5 fois). L'augmentation de volume du sel est due non seulement à la dilatation de son réseau cristallin mais aussi à son fractionnement laissant ainsi de l'espace libre entre les microcristaux de $Sr(NH_3)_8Cl_2$ et $Ba(NH_3)_8Cl_2$.

La plupart des sels désorbe l'ammoniac par palier, en fonction de leurs sites de coordination. Dans le cas du chlorure de Strontium, sept molécules d'ammoniac sont désorbées dans un premier temps, une dernière molécule d'ammoniac dans un deuxième temps. La courbe d'équilibre d'absorption/désorption d'ammoniac des sels est définie en fonction de la température et de la pression par la relation de Clausius-Clapeyron, à savoir:

$$\ln P_{NH3} = \frac{-\Delta Hr}{RT} + \frac{\Delta Sr}{R}$$

où $\Delta Hr$ représente l'enthalpie et $\Delta Sr$ l'entropie de formation du complexe ammoniac/sel pour la stoechiométrie considérée.

Le tableau ci-dessous présente les valeurs d'enthalpie et entropie de formation issues de la littérature scientifique pour les sels $MgCl_2$, $SrCl_2$ et $BaCl_2$.

| Sel | Equilibre | Enthalpie (J/mol) | Entropie (J/mol.K) |
|---|---|---|---|
| NH3 | (L/G) | 23 336 | 193 |
| $MgCl_2$ | (6/2) | 55 660 | 231 |
| | (2/1) | 74 911 | 230 |
| | (1/0) | 87 048 | 231 |
| $SrCl_2$ | (8/1) | 41 431 | 229 |
| | (1/0) | 48 123 | 230 |
| $BaCl_2$ | (8/0) | 37 665 | 227 |

Sur la figure 2 sont représentées les courbes d'équilibre température et pression pour ces 3 sels. Ces phénomènes d'absorption et désorption sont entièrement réversibles. Il est alors possible de stocker l'ammoniac dans les sels pour l'application SCR. L'ammoniac est injecté dans l'échappement pour la dépollution après désorption des sels, cette désorption étant pilotée en contrôlant température et/ou pression au sein de l'enceinte de stockage.

Les chlorures d'alcalino-terreux forment des complexes à forte densité en ammoniac comme indiqué dans le tableau ci-dessous pour les 3 sels $MgCl_2$, $SrCl_2$ et $BaCl_2$.

| Matériau | Formule Chimique | Masse Molaire (g/mol) | Densité (Kg/L) | Mol $NH_3$/mol | Densité $NH_3$ (Kg $NH_3$/ Kg) | Densité $NH_3$ (Kg $NH_3$ / L) |
|---|---|---|---|---|---|---|
| "AdBlue" | $(NH_2)_2CO+H_2O$ | - | 1.086 | 2 | 0.184 | 0.2 |
| Magnesium Hexa-Ammine Chloride | $Mg(NHb)_6Cl_2$ | 197.4 | 1.252 | 6 | 0.52 | 0.65 |
| Strontium Octa-Ammine Chloride | $Sr(NH_3)_8Cl_2$ | 294.8 | 1.3 | 8 | 0.46 | 0.6 |
| Barium Octa-Ammine Chloride | $Ba(NH_3)_8Cl_2$ | 344.4 | 1.6 | 8 | 0.39 | 0.65 |
| Ammoniac liquide | $NH_3$ | 17 | 0.61 | 1 | 1 | 0.61 |

La densité cristalline des ammoniacates, proche de 0.6 kg$NH_3$/L, est élevée en comparaison de la densité en ammoniac de la solution dite "AdBlue", actuellement retenue, qui est égale à 0.2 kg$NH_3$ / L.

Cette propriété rend le concept particulièrement attractif pour l'automobile en simplifiant fortement la difficulté d'intégration du réservoir puisque son volume est réduit par un facteur d'environ trois et sa masse est réduite environ de moitié.

Un enjeu important du stockage d'ammoniac pour la dépollution SCR est la densité globale réellement accessible pour un système de stockage adapté à l'automobile, en regard de cette densité cristalline asymptotique. S'il est possible d'atteindre par compactage des sels saturés en ammoniac des valeurs de densité proche de la densité théorique du cristal, le matériau obtenu pour ces forts niveaux de compactage doit aussi être compatible avec des exigences fonctionnelles telles que le débit en ammoniac, le temps de réponse du système, la puissance calorifique ou encore la recharge en ammoniac.

Le simple compactage d'un sel saturé en ammoniac ne conduit pas à la réalisation d'un matériau satisfaisant pour une application aisée à la dépollution SCR automobile.

***Un matériau composite dense, conducteur, perméable, rechargeable***

Dans la présente invention, l'ammoniac nécessaire à la réduction des NOx par SCR est stocké dans un sel de type chlorure d'alcalino-terreux. Deux sels en particulier sont considérés dans la présente invention: le chlorure de Strontium ($SrCl_2$) et le chlorure de Baryum ($BaCl_2$) en raison d'une pression et d'une densité cristalline élevées (de l'ordre de 0.6 kg $NH_3$/L) lorsque le sel est saturé en ammoniac permettant ainsi de limiter l'énergie nécessaire à fournir pour la désorption de l'ammoniac (5 kJ/kg et 20kJ/kg pour porter $BaCl_2$, respectivement $SrCl_2$ d'une température ambiante de 20°C à une température correspondante à une pression de vapeur en ammoniac de 3 bar).

Selon l'invention, le sel en poudre est incorporé à du graphite expansé et est ensuite compacté formant une matrice composite poreuse permettant un stockage réversible de l'ammoniac. La matrice de graphite recompressée forme une structure robuste dans laquelle sont dispersés les grains de sels. Lors de la première phase d'absorption d'ammoniac, la dilatation des grains de sels (dilatation d'un rapport 4 environ) structure le réseau formé par le graphite. Lors de la désorption, les grains de sels restent en place piégés dans la structure et ne génère pas de tassement du lit de particules de sels.

L'ajout de graphite expansé au sel réactif permet aussi de maintenir une diffusion aisée du gaz dans le matériau même pour des niveaux de compactage important. Il devient possible de maintenir des débits d'ammoniac importants lors de la désorption pour la réduction des NOx et pendant la phase d'absorption pour le remplissage pour des densités en ammoniac élevées.

L'ajout de graphite expansé au sel réactif permet enfin d'améliorer significativement la conductivité thermique au sein du matériau. Selon la nature du sel et les proportions respectives de sel et de graphite, des conductivités thermiques proches d'un métal conducteur sont accessibles même pour des niveaux de compactage élevés.

Dans la pratique, le graphite expansé est obtenu à partir du graphite naturel après traitement thermique. Un acide, par exemple l'acide sulfurique $H_2SO_4$, est mélangé au graphite naturel et s'intercale entre les feuillets du graphite. Lorsque le mélange est exposé à une température élevée, supérieure à 150°C, il y a exfoliation du graphite. Du graphite expansé de très faible densité volumique (comprise entre 0.005 et 0.015 kg/L) est obtenu.

Le graphite expansé est incorporé au sel réactif en poudre de façon à former un mélange homogène des deux matériaux, par exemple au moyen d'un mélangeur à lit fluidisé. La taille moyenne des cristaux de sel est un élément à prendre en compte puisqu'elle a une incidence sur la qualité du mélange avec le graphite. Une granulométrie comprise entre 10 et 500 microns est de préférence retenue.

Dans une variante du procédé de fabrication du matériau de stockage, le complexe de graphite formé avec l'acide est mélangé au sel avant traitement thermique, l'ensemble étant ensuite porté à une température supérieure à 150°C.

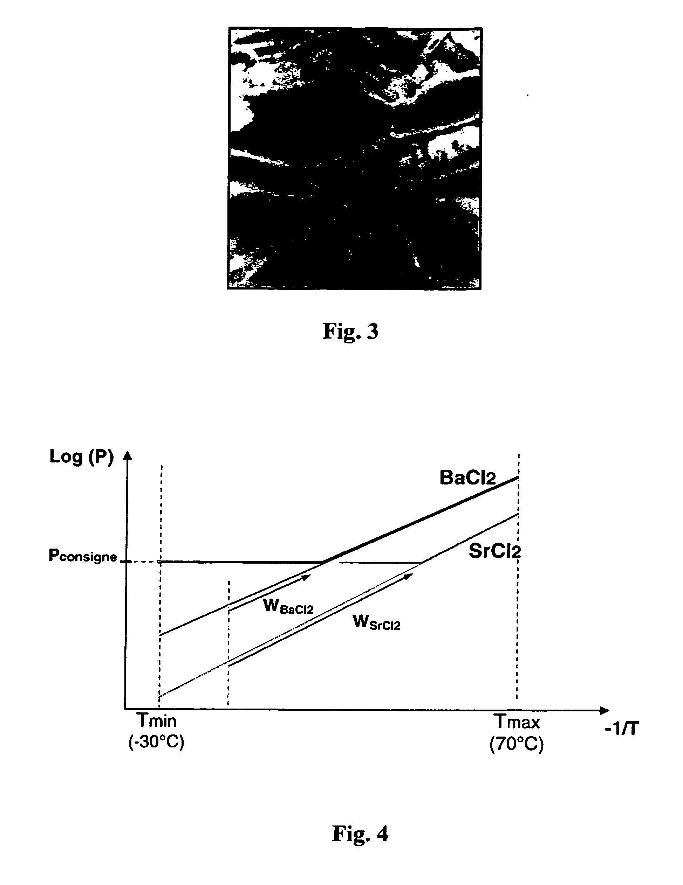

Le mélange homogène sel/graphite expansé est ensuite compacté par exemple au moyen d'une presse hydraulique. Le mélange est comprimé de façon unidirectionnelle et conduit à la formation d'une matrice composite graphite/sel aux propriétés anisotropes. Par effet de la compression, les lamelles de graphite s'intercalent entre les grains de sels en premier lieu selon un axe perpendiculaire à l'axe de compression comme le montre la figure 3.

Pour les matériaux mis en oeuvre dans la présente invention, une diffusion aisée du gaz est obtenue, avec des valeurs de perméabilité supérieures à 1 à $10^{-15}$ $m^2$, ainsi qu'une conductivité thermique élevée dans l'axe perpendiculaire à l'axe de compression, avec des valeurs supérieures à 5 W$\bullet$m$^{-1}\bullet$K$^{-1}$.

La matrice composite formée du sel et du graphite expansé recomprimés forme le matériau de stockage d'ammoniac. En plaçant cette matrice sous atmosphère d'ammoniac gazeux, l'absorption et la désorption d'ammoniac du matériau est pilotable par contrôle de la pression et/ou de la température selon l'équilibre décrit par la relation de Clausius-Clapeyron. Comme décrit précédemment, la mise en oeuvre d'un matériau de stockage adapté à l'automobile doit prendre en compte l'efficacité de la désorption de l'ammoniac pour la réduction des NOx mais aussi l'efficacité de l'absorption de l'ammoniac pour permettre un remplissage périodique du matériau de stockage. En admettant un remplissage périodique du matériau lors de l'étape de maintenance périodique du moteur (i.e. lors de la vidange), il convient de pouvoir recharger le matériau de façon satisfaisante au moins 10 fois pour couvrir la durée de vie moyenne du véhicule. Pour cette raison, le matériau de stockage est caractérisé par le taux de réaction, c'est-à-dire le ratio entre la masse stockée et la masse stockable, mesuré après 10 cycles d'absorption/désorption complets.

Le tableau ci-dessous présente les résultats obtenus pour plusieurs mises en oeuvre de matériau de stockage utilisant les sels $SrCl_2$ et $BaCl_2$.

| Matériau | Sel | Taux Graphite (% masse) | Densité NH$_3$ (Kg NH$_3$/L) | Taux Réaction (après 10 cycles) |
|---|---|---|---|---|
| 1 | $SrCl_2$ | 0 | 0.45 | 25% |
| 2 | $SrCl_2$ | 0 | 0.35 | 92% |
| 3 | $SrCl_2$ | 15 | 0.45 | 96% |
| 4 | $SrCl_2$ | 15 | 0.35 | 98% |
| 5 | $BaCl_2$ | 15 | 0.5 | 93% |
| 6 | $BaCl_2$ | 15 | 0.45 | 97% |

Le simple compactage d'un sel réactif (matériau n°1 et n°2) ne permet pas d'obtenir simultanément un matériau dense et rechargeable. La mise en oeuvre proposée dans la présente invention conduit en revanche à la réalisation d'un matériau particulièrement adapté à l'automobile car dense en ammoniac ($\geq$0.45 kg NH$_3$/L) et rechargeable en ammoniac (taux de réaction $\geq$ 95% après 10 cycles complets d'absorption/désorption).

Selon la présente invention, le matériau de stockage, tel que décrit dans le paragraphe précédent, est placé dans une enceinte de stockage muni d'un dispositif de chauffage. En pilotant la température du matériau de stockage au moyen de ce dispositif, il est possible de contrôler la pression d'ammoniac au sein de l'enceinte selon l'équation de Clausius-Clapeyron. Différents dispositifs de chauffage sont envisageables, tel qu'une résistance électrique ou un échangeur de chaleur utilisant l'eau du moteur ou l'huile du moteur.

Pour assurer une injection d'ammoniac de bonne qualité, i.e. permettant un mélange homogène de l'ammoniac avec les gaz d'échappement, l'enceinte de stockage est portée à une pression de consigne supérieure à la pression des gaz dans l'échappement, typiquement comprise entre 1.5 et 5 bar, et préférentiellement entre 2.5 et 3.5 bar. La figure 4 illustre le principe de fonctionnement du système de stockage: lorsque la température ambiante génère une pression de vapeur inférieure à la pression de consigne, le dispositif de chauffage est enclenché pour augmenter la température et donc la pression au sein de l'enceinte. A plus haute température ambiante, la pression de vapeur dépasse la pression de consigne. Le module d'alimentation et de dosage 6 (Figure 1) s'adapte à cette pression plus élevée pour le pilotage de l'injection de NH$_3$ à l'échappement.

Conformément à une application dans l'automobile, le système selon l'invention est conçu pour une utilisation dans des conditions de température extérieure comprise entre - 30°C et +70°C et de pression extérieure entre 0.8 et 1.2 bar. L'enceinte doit être conçue pour supporter une pression maximum en fonctionnement de l'ordre de 15 bar pour le sel $BaCl_2$ et de l'ordre de 7bar pour $SrCl_2$.

Dans les conditions usuelles d'homologation automobile (Température extérieur =20°C), la pression de vapeur est environ de 1.3 bar absolu pour $BaCl_2$ et 0.34 bar absolu pour $SrCl_2$. Pour atteindre la pression de consigne, le dispositif de chauffage est enclenché à faible puissance dans le cas du sel $BaCl_2$ et à une puissance plus importante dans le cas du sel $SrCl_2$.

Une exigence importante de l'automobile est la nécessité de pouvoir démarrer l'injection d'ammoniac peu de temps après le démarrage du moteur pour limiter au maximum les émissions d'oxydes d'azote à l'échappement. La pression à l'intérieure de l'enceinte de stockage doit atteindre rapidement une pression de fonctionnement suffisante pour une bonne qualité d'injection. Une autre exigence est de limiter la puissance calorifique nécessaire au pilotage du système de stockage et d'alimentation pour optimiser la consommation globale du véhicule et donc ses émissions de CO2.

Dans l'invention proposée, la mise en oeuvre d'un sel à haute pression de vapeur tels que $BaCl_2$ ou $SrCl_2$ au sein d'une matrice composite graphite/set fortement perméable et conducteur, elle-même intégrée dans une enceinte de stockage optimisant le transfert de chaleur et de gaz entre le matériau et le système, forme un système de stockage aux propriétés de pilotage dynamique particulièrement adaptées à ces exigences automobile.

Selon l'invention, le sel retenu aura pour caractéristique une enthalpie de formation de l'ammoniacate de préférence inférieure à 40 J●mol$^{-1}$. En pratique, il est possible avec le sel **$BaCl_2$** de réaliser une enceinte de stockage permettant de stocker au moins 3kg d'ammoniac et comportant un corps de chauffe capable de délivrer une puissance calorifique inférieure à 200W, permettant d'établir une pression d'ammoniac au sein de l'enceinte au moins égale à 2.5bar en moins de deux minutes après le démarrage du système placé à température ambiante.

Ce résultat est particulièrement attractif pour l'automobile. Il devient possible de mettre en oeuvre un système constitué uniquement d'une enceinte de stockage et d'alimentation sans nécessiter la mise en oeuvre d'un volume tampon ou d'une enceinte dédiée au démarrage tel qu'envisagé aujourd'hui dans l'état de l'art.

Dans l'invention proposée, le matériau de stockage est traversé par un ou plusieurs éléments diffuseurs permettant la libre circulation du gaz et bloquant par filtration les particules solides de sel ou de complexes. Le diffuseur traverse le matériau de stockage selon un axe parallèle à l'axe de compression. Le diffuseur est caractérisé par une structure rigide et une capacité de filtration inférieure à la granulométrie initiale du sel réactif.

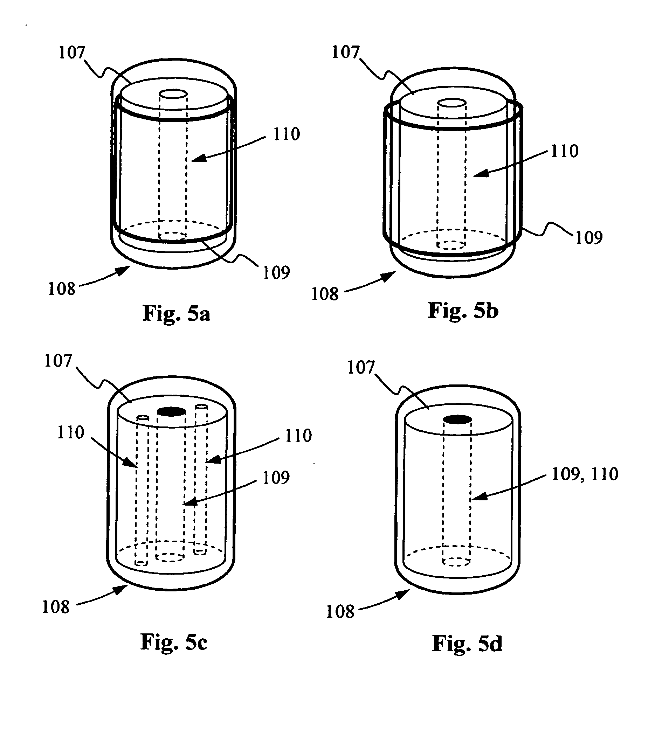

Selon une première variante d'exécution telle qu'illustrée à la Figure 5a, le matériau de stockage 107 est compacté de manière à occuper un volume sensiblement cylindrique et est traversé en son centre, selon son axe longitudinal, par un élément diffuseur 110. Un corps de chauffe 109 est placé autour de la surface cylindrique du matériau 107. Celui-ci, le diffuseur 110 ainsi que le corps de chauffe 109 sont positionnés dans l'enceinte de stockage 108.

Selon une seconde variante d'exécution telle qu'illustrée à la Figure 5b, le matériau de stockage 107 est traversé en son centre par un élément diffuseur 110. Le matériau 107 ainsi que le diffuseur 110 est positionné dans l'enceinte de stockage 108. Un corps de chauffe 109 est placé autour de l'enceinte 108. Dans ce cas, le matériau utilisé pour l'enceinte de stockage 108 devra être choisi de telle sorte à permettre une bonne conduction thermique afin de transférer la chaleur du corps de chauffe 109 au matériau de stockage 107.

Selon une troisième variante d'exécution telle qu'illustrée à la Figure 5c, le matériau de stockage 107 est traversé en son centre par le corps de chauffe 109 selon l'axe de compression du matériau de stockage. Un ou plusieurs éléments diffuseurs 110 traversent le matériau de stockage. Le matériau composite 107, le ou les éléments diffuseurs 110 ainsi que le corps de chauffe 109 sont positionnés dans l'enceinte de stockage 108.

Enfin, selon une quatrième variante d'exécution telle qu'illustrée à la Figure 5d, un corps de chauffe poreux 109, sous forme par exemple d'une une tresse métallique, est agencé à l'intérieur du diffuseur 110, lequel traverse le matériau de stockage 107 en son centre selon l'axe de compression du matériau de stockage. Le corps de chauffe 109 doit permettre un chauffage efficace du matériau 107 et avoir des propriétés de filtration similaire aux diffuseurs précédemment décrits de manière à permettre la libre circulation du gaz tout en bloquant par filtration les particules solides de sel ou de complexes.

Les différentes variantes de l'enceinte de stockage telles que décrites précédemment permettent un transfert aisé du gaz et de la chaleur entre le matériau et le reste de l'enceinte de stockage

Pour une application à l'automobile, plusieurs matériaux sont envisageables pour l'enceinte de stockage. Dans certaines variantes, un matériau métallique, préférentiellement de l'acier, sera retenu. Dans d'autres variantes, un matériau de type plastique, éventuellement renforcé pour permettre une structure suffisamment rigide, sera choisi.

Dans l'invention proposée, l'enceinte de stockage d'ammoniac sera couplée au réservoir carburant du véhicule. Un seul réservoir, composé de deux compartiments (un réservé au stockage de carburant gazole, l'autre au stockage d'ammoniac) sera intégré dans le véhicule, permettant une intégration simplifiée et des coûts réduits. Le procédé de fabrication de l'enceinte de stockage est simple et peut être appliqué à l'échelle de l'industrie automobile.

Dans l'invention proposée, le procédé de fabrication est constitué des étapes suivantes :

- préparation du sel pour obtenir une granulométrie comprise entre 10 et 500 microns;
- préparation du graphite expansé, par traitement thermique d'un mélange graphite naturel + acide;
- mélange du sel réactif et du graphite expansé;
- compactage du mélange graphite/sel;
- mise en oeuvre du matériau compacté, du dispositif de chauffage et du ou des diffuseurs dans l'enceinte de stockage;
- saturation en ammoniac de l'enceinte de stockage par mise sous atmosphère pressurisé d'ammoniac gazeux ou par versement d'ammoniac liquide.

Le matériau permettant un stockage réversible, un ou plusieurs remplissages peuvent être effectués simplement pendant la durée de vie moyenne du véhicule. Dans l'invention proposée, la connexion de l'enceinte de stockage à une source d'ammoniac gazeux sous pression inférieure à 8 bar pendant une durée inférieure à 24 heures permet pendant toute la durée de vie du véhicule un remplissage complet à plus de 95% de la masse initiale d'ammoniac. Il devient possible de réaliser cette opération périodique de remplissage au moyen d'une simple connexion gaz, sans démonter physiquement le réservoir du véhicule.

## Revendications

1. Procédé de fabrication d'un matériau composite (107) pour le stockage et l'alimentation en ammoniac destiné à réduire la quantité de NOx dans les gaz d'échappement d'un véhicule à moteur par SCR, comportant un ou plusieurs sels comprimé avec du graphite, le procédé étant **caractérisé en ce qu'**il comprend des étapes de :

   - préparation du ou des sels pour obtenir une granulométrie comprise entre 10 et 500 microns ;
   - préparation de graphite expansé, par traitement thermique d'un mélange comprenant du graphite et de l'acide,
   - mélange du ou des sels avec le graphite ;
   - compactage par compression de façon unidirectionnelle du mélange graphite expansé/sel pour obtenir le matériau composite (107) tel que le sel est utilisé comme liant de manière à obtenir une matrice composite aux propriétés anisotropes, la matrice étant une matrice poreuse destinée à recevoir de l'ammoniac,

   le matériau composite (107) étant adapté pour former, lors de la réception de l'ammoniac, des complexes chimiques de formule générale M$\mathbf{a}$(NH3)$\mathbf{n}$X$\mathbf{m}$ ; où M est un ou plusieurs cations métalliques alcalins comme Li, Na, K ou Cs, ou métalliques alcalino-terreux comme Mg, Ca, Sr ou Ba, ou métallique de transition comme V, Cr, Fe, Co, Ni, Cu ou Zn ; où X est un ou plusieurs anions de type fluorure, bromure, ou chlorure, où $\mathbf{a}$ est le nombre de cations et $\mathbf{m}$ est le nombre d'anions par molécule de sel, et $\mathbf{n}$ est le nombre de coordination du complexe pouvant être compris entre 2 et 12.

2. Procédé selon la revendication 1, **caractérisé en ce que** le matériau composite comporte entre 2 et 20% en masse de graphite expansé.

3. Procédé selon la revendication 1 ou 2, **caractérisé en ce que** le sel est du chlorure de strontium (SrCl$_2$) et/ou du chlorure de baryum (BaCl$_2$).

4. Procédé selon l'une quelconque des revendications 1 à 3, **caractérisé en ce que** le graphite expansé comprimé est obtenu par du graphite expansé possédant une masse volumique comprise entre 0.0005 [kg/L] et 0.015 [kg/L] avant compression.

5. Procédé selon l'une quelconque des revendications 1 à 4, **caractérisé en ce que** le matériau composite (107) présente une perméabilité au moins égale à $10^{-15}$ m$^2$ et une conductivité thermique selon un axe perpendiculaire à l'axe de compression au moins égale à 5 W•m$^{-1}$•K$^1$.

6. Procédé de mise en oeuvre d'un système de stockage et d'alimentation en ammoniac pour la réduction des NOx par SCR, **caractérisé en ce qu'**il comprend des étapes de :

   - fabrication d'un matériau composite (107) par un procédé selon l'une des revendications 1 à 5 ;
   - agencement du matériau composite (107), d'un ou de corps de chauffe (9, 109) pour augmenter la température du matériau composite (107), et d'un ou de plusieurs éléments diffuseurs (110) dans une enceinte (8, 108) ;
   - saturation en ammoniac de l'enceinte (8, 108) par mise sous atmosphère pressurisée d'ammoniac gazeux ou par versement d'ammoniac liquide.

7. Procédé selon la revendication 6, **caractérisé en ce qu'**il comprend en outre une étape de désorption du ou des sels saturés en ammoniac à une pression comprise entre 5 et 30 bar.

8. Procédé selon la revendication 6 ou 7, **caractérisé en ce qu'**il comprend une étape de fonctionnement du véhicule à moteur telle que la pression à l'intérieur de l'enceinte (108) est comprise entre 1.5 et 5 bar.

9. Procédé selon l'une quelconque des revendications 6 à 8, **caractérisé en ce que** le matériau composite (107) agencé est traversé par un ou plusieurs du ou des éléments diffuseurs (110) permettant la libre circulation de l'ammoniac à l'état gazeux après désorption du matériau et bloquant par filtration les particules solides du sel et/ou du complexe.

10. Procédé selon la revendication 9, **caractérisé en ce qu'**au moins un corps de chauffe (109) est agencé à l'intérieur d'au moins un élément diffuseur (110).

11. Procédé selon l'une quelconque des revendications 6 à 9, **caractérisé en ce que** le corps de chauffe (109) est agencé autour du matériau composite de stockage (107), à l'intérieur ou à l'extérieur de l'enceinte de stockage (108).

12. Procédé selon l'une quelconque des revendications 6 à 11, **caractérisé en ce que** le matériau composite (107) agencé est traversé par le ou les corps de chauffe (109) agencé(s).

13. Procédé de mise en oeuvre d'un réservoir d'un véhicule à moteur, **caractérisé en ce qu'**il comprend des étapes de mise en oeuvre d'un matériau composite (107) selon l'une quelconque des revendications 1 à 5 ou d'un système de stockage et d'alimentation en ammoniac selon l'une quelconque des revendications 6 à 11, tel qu'un compartiment du véhicule à moteur est réservé au stockage de carburant, l'autre comportant le matériau composite (107) ou le système.

**Patentansprüche**

1. Verfahren zur Herstellung eines Verbundmaterials (107) für das Lagern von und die Beschickung mit Ammoniak, welches dafür bestimmt ist, die Menge von NOx in den Auspuffgasen eines Kraftfahrzeugs durch SCR (selektive katalytische Reduktion) zu verringern, umfassend ein oder mehrere Salze, verdichtet mit Graphit, wobei das Verfahren **dadurch gekennzeichnet ist, dass** es folgende Schritte umfasst:

    - Vorbereiten des oder der Salze, um eine Kornklassierung zwischen 10 und 500 Mikrometern eingeschlossen zu erhalten;
    - Herstellen von expandiertem Graphit durch Wärmebehandlung einer Mischung, die Graphit und Säure umfasst,
    - Mischen des oder der Salze mit dem Graphit;
    - Verdichten der expandierter Graphit/Salz-Mischung durch Komprimierung in einer in einer Richtung verlaufenden Weise, um das Verbundmaterial (107) zu erhalten, dergestalt, dass das Salz als Bindemittel verwendet wird derart, dass eine Verbundmatrix mit anisotropen Eigenschaften erhalten wird, wobei die Matrix eine poröse Matrix ist, die dazu bestimmt ist, Ammoniak aufzunehmen,

    wobei das Verbundmaterial (107) angepasst ist, um während der Aufnahme von Ammoniak chemische Komplexe der allgemeinen Formel M$a$(NH3)$n$X$m$, worin M ein oder mehrere Alkalimetallkationen, wie Li, Na, K oder Cs, oder Erdalkalimetallkationen, wie Mg, Ca, Sr oder Ba, oder Übergangsmetallkationen, wie V, Cr, Fe, Co, Ni, Cu oder Zn, ist; worin X ein oder mehrere Anionen vom Typ Fluorid, Bromid oder Chlorid ist, worin **a** die Anzahl von Kationen ist und **m** die Anzahl von Anionen pro Salzmolekül ist und **n** die Koordinationszahl des Komplexes, die zwischen 2 und 12 eingeschlossen liegen kann, ist, zu bilden.

2. Verfahren nach Anspruch 1, **dadurch gekennzeichnet, dass** das Verbundmaterial zwischen 2 und 20 Gew.-% expandierten Graphit umfasst.

3. Verfahren nach Anspruch 1 oder 2, **dadurch gekennzeichnet, dass** das Salz Strontiumchlorid ($SrCl_2$) und/oder Bariumchlorid ($BaCl_2$) ist.

4. Verfahren nach einem der Ansprüche 1 bis 3, **dadurch gekennzeichnet, dass** der verdichtete, expandierte Graphit ausgehend von expandiertem Graphit, der vor der Komprimierung eine volumenbezogene Masse zwischen 0,0005 [kg/l] und 0,015 [kg/l] eingeschlossen aufweist, erhalten wird.

5. Verfahren nach einem der Ansprüche 1 bis 4, **dadurch gekennzeichnet, dass** das Verbundmaterial (107) eine Durchlässigkeit von mindestens gleich $10^{-15}$ m$^2$ und eine spezifische Wärmeleitfähigkeit entlang einer rechtwinkligen Achse zu der Kompressionsachse von mindestens gleich 5 W·m$^{-1}$·K$^{-1}$ aufweist.

6. Verfahren zur Verwirklichung eines Systems zur Lagerung von und Beschickung mit Ammoniak für die Verringerung der NOx durch SCR (selektive katalytische Reduktion), **dadurch gekennzeichnet, dass** es folgende Schritte umfasst:

    - Herstellen eines Verbundmaterials (107) durch ein Verfahren nach einem der Ansprüche 1 bis 5;
    - Anordnen des Verbundmaterials (107), von einem oder mehreren Heizelementen (9, 109), um die Temperatur des Verbundmaterials (107) zu erhöhen, und von einem oder mehreren Diffusorelementen (110) in einem Raum (8, 108);
    - Sättigen des Raums (8, 108) mit Ammoniak durch Unterdrucksetzen mit gasförmigem Ammoniak oder durch Ausgießen von flüssigem Ammoniak.

7. Verfahren nach Anspruch 6, **dadurch gekennzeichnet, dass** es außerdem einen Desorptionsschritt des oder der mit Ammoniak gesättigten Salze bei einem Druck zwischen 5 und 30 bar eingeschlossen umfasst.

8. Verfahren nach Anspruch 6 oder 7, **dadurch gekennzeichnet, dass** es einen Schritt eines Betriebs des Kraftfahrzeugs derart, dass der Druck im Inneren des Raums (108) zwischen 1,5 und 5 bar eingeschlossen liegt, umfasst.

9. Verfahren nach einem der Ansprüche 6 bis 8, **dadurch gekennzeichnet, dass** das angeordnete Verbundmaterial (107) durch ein oder mehrere des oder der Diffusorelemente (110) durchdrungen wird, welche die freie Zirkulation des Ammoniaks in gasförmigem Zustand nach Desorption von dem Material erlauben und durch Filtration die festen Teilchen des Salzes und/oder des Komplexes blockieren.

10. Verfahren nach Anspruch 9, **dadurch gekennzeichnet, dass** mindestens ein Heizelement (109) im Inneren von mindestens einem Diffusorelement (110) angeordnet ist.

11. Verfahren nach einem der Ansprüche 6 bis 9, **dadurch gekennzeichnet, dass** das Heizelement (109) um das der Lagerung dienende Verbundmaterial (107) herum, im Inneren oder auf der Außenseite des Aufbewahrungsraums (108) angeordnet ist.

12. Verfahren nach einem der Ansprüche 6 bis 11, **dadurch gekennzeichnet, dass** das angeordnete Verbundmaterial (107) durch das oder die angeordnete(n) Heizelement(e) (109) durchdrungen wird.

13. Verfahren zur Verwirklichung eines Behälters eines Kraftfahrzeugs, **dadurch gekennzeichnet, dass** es Schritte umfasst, ein Verbundmaterial (107) nach einem der Ansprüche 1 bis 5 oder ein System zur Lagerung von und Beschickung mit Ammoniak nach einem der Ansprüche 6 bis 11 zu verwirklichen derart, dass eine Kammer des Kraftfahrzeugs für die Lagerung von Kraftstoff reserviert ist, wobei die andere das Verbundmaterial (107) oder das System umfasst.

**Claims**

1. Method for manufacturing a composite material (107) for storing and supplying ammonia intended to reduce the quantity of NOx in the exhaust gases of a motor vehicle by SCR, comprising one or a plurality of salts compressed with graphite, the method being **characterised in that** it comprises steps of:

    - preparing the salt(s) to obtain a particle size distribution between 10 and 500 microns;
    - preparing expanded graphite, by heat-treating a mixture comprising graphite and acid;
    - mixing the salt(s) with the graphite;
    - compacting, by means of unidirectional compression, the expanded graphite/salt mixture to obtain the composite material (107) such that the salt is used as a binder so as to obtain a composite matrix with anisotropic properties, the matrix being a porous matrix intended to receive ammonia,

the composite material (107) being suitable for forming, on receiving ammonia, chemical complexes having the general formula M$a$(NH3)$n$X$m$; where M is one or a plurality of alkaline metal cations such as Li, Na, K or Cs, or alkaline-earth metal cations such as Mg, Ca, Sr or Ba, or transition metal cations such as V, Cr, Fe, Co, Ni, Cu or Zn; where X is one or a plurality of anions such as fluoride, bromide, or chloride, where **a** is the number of cations and **m** is the number of anions per salt molecule, and **n** is the coordination number of the complex optionally between 2 and 12.

2. Method according to claim 1, **characterised in that** the composite material comprises between 2 and 20% by mass of expanded graphite.

3. Method according to claim 1 or 2, **characterised in that** the salt is strontium chloride ($SrCl_2$) and/or barium chloride ($BaCl_2$).

4. Method according to any of claims 1 to 3, **characterised in that** the compressed expanded graphite is obtained with expanded graphite having a density between 0.0005 [kg/L] and 0.015 [kg/L] prior to compression.

5. Method according to any of claims 1 to 4, **characterised in that** the composite material (107) has a permeability at least equal to $10^{-15}$ m$^2$ and a thermal conductivity along an axis perpendicular to the compression axis at least equal to 5 W•m$^{-1}$•K$^{-1}$.

6. Method for using a system for storing and supplying ammonia for reducing NOx by SCR, **characterised in that** it comprises steps of:

- manufacturing a composite material (107) using a method according to any of claims 1 to 5;
- arranging the composite material (107), one or a plurality of heating units (9, 109) to increase the temperature of the composite material (107), and one or a plurality of diffuser elements (110) in an enclosure (8, 108);
- saturating the enclosure (8, 108) with ammonia by compressing gaseous ammonia or by pouring liquid ammonia.

7. Method according to claim 6, **characterised in that** it further comprises a step for desorbing the salt(s) saturated with ammonia at a pressure between 5 and 30 bar.

8. Method according to claim 6 or 7, **characterised in that** it comprises a step for operating a motor vehicle such that the pressure inside the enclosure (108) is between 1.5 and 5 bar.

9. Method according to any of claims 6 to 8, **characterised in that** the arranged composite material (107) is traversed by one or a plurality of the diffuser elements (110) enabling the free circulation of ammonia in the gaseous state after desorbing the material and blocking solid salt and/or complex particles by filtration.

10. Method according to claim 9, **characterised in that** at least one heating unit (109) is arranged inside at least one diffuser element (110).

11. Method according to any of claims 6 to 9, **characterised in that** the heating unit (109) is arranged around the composite storage material (107), inside or outside the storage enclosure (108).

12. Method according to any of claims 6 to 11, **characterised in that** the arranged composite material (107) is traversed by the arranged heating unit(s) (109).

13. Method for using a motor vehicle tank, **characterised in that** it comprises steps for using a composite material (107) according to any of claims 1 to 5 or a system for storing and supplying ammonia according to any of claims 6 to 11, such that one compartment of the motor vehicle is reserved for storing fuel, the other comprising the composite material (107) or the system.

**Fig. 1**

**Fig. 2**

**Fig. 3**

**Fig. 4**

**Fig. 5a**

**Fig. 5b**

**Fig. 5c**

**Fig. 5d**

**EP 2 428 490 B1**

## RÉFÉRENCES CITÉES DANS LA DESCRIPTION

**Documents brevets cités dans la description**

- WO 06012903 A
- WO 06081824 A
- WO 2010025947 A
- US 4852645 A

**Littérature non-brevet citée dans la description**

- **WANG K et al.** *Effective thermal conductivity of expanded graphite-CaCl2 composite adsorbent for chemical adsorption chillers*
- **J.H. HAN ; K.H. LEE.** *Gas permeability of expanded graphite-metallic salt composite*
- **HUMMELSHOJ et al.** *Am. Chem. Soc.,* 2006, vol. 128